# EUROPEAN PATENT SPECIFICATION

(11) **EP 4 459 813 B1**
(45) Date of publication and mention of the grant of the patent: **03.06.2026**
(21) Application number: 22914444.9
(22) Date of filing: 21.12.2022
(51) Int. Cl.: H01R 13/703, H01R 13/04, H01R 13/10, H01R 13/502, H01R 13/66, H01R 24/00, B60L 53/16, H01R 13/713, H01R 13/52

(54) **HIGH-VOLTAGE INTERLOCK STRUCTURE FOR ELECTRIC VEHICLE CHARGING SOCKET, AND CHARGING APPARATUS**
HOCHSPANNUNGSVERRIEGELUNGSSTRUKTUR FÜR EINE ELEKTROFAHRZEUGLADESTECKDOSE UND LADEVORRICHTUNG
STRUCTURE DE VERROUILLAGE À HAUTE TENSION POUR PRISE DE CHARGE DE VÉHICULE ÉLECTRIQUE, ET APPAREIL DE CHARGE

(30) Priority: 28.12.2021 CN 202111622119
(43) Date of publication of application: 06.11.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/140643
(87) International publication number: WO 2023/125190

(56) References cited:
- WO-A1-2023/046826
- CN-A- 110 352 536
- CN-A- 112 825 458
- CN-A- 112 825 458
- CN-A- 114 744 451
- CN-U- 204 088 767
- CN-U- 207 677 195
- CN-U- 208 655 965
- CN-U- 208 655 965
- CN-U- 217 823 558
- KR-A- 20170 100 330
- US-A1- 2013 090 009
- US-A1- 2018 034 219
- US-A1- 2024 372 385

## Description

### TECHNICAL FIELD

The present disclosure relates to the technical field of connectors, and particularly to a high-voltage interlock structure for an electric vehicle charging socket and a charging apparatus.

### BACKGROUND

Energy shortage and environmental pollution have always been two major problems that plague the development of the vehicle industry and related industries, and new energy vehicles, as a solution to the above problems, have gradually become the mainstream of the development of the vehicle industry at present. Compared with the traditional vehicles, one of the characteristics of the new energy vehicles is that the new energy vehicles often work in the environment of large current and high voltage, which has far exceeded the safe voltage of human bodies. However, the traditional charging socket has low reliability and great potential safety hazards, and has been unable to meet the use requirements of the new energy vehicles at present.

Therefore, in the technical field of electric vehicle charging, there is an urgent need of a charging socket that can be quickly detached, and when the charging socket is detached or a rear cover of the charging socket is opened, the vehicle automatically disconnects the high-voltage circuit to protect the safety of the operator.

The high-voltage interlock structure for electric vehicle charging socket, and charging apparatus have been known from the prior art, e.g., from documents of WO2023/046826A1, US2024/372385A1, CN 208 655 965 U, CN 112825 458A.

### SUMMARY

The present disclosure aims to provide a new technical solution of a high-voltage interlock structure for an electric vehicle charging socket.

According to a first aspect of the present disclosure, there is provided a high-voltage interlock structure for an electric vehicle charging socket, comprising:
a charging socket body;
at least one connector detachably connected to the charging socket body;
a rear cover detachably connected to the charging socket body;
a control device disposed in the charging socket body or an electric vehicle;
high-voltage interlock connectors, in which one of the high-voltage interlock connectors is disposed between the charging socket body and the connector, and/or one of the high-voltage interlock connectors is disposed between the charging socket body and the rear cover, and the high-voltage interlock connector is connected to a circuit where the control device is located;
when any of the high-voltage interlock connectors is disconnected, the control device controls the charging socket to be disconnected from a power source.

Optionally, each of the high-voltage interlock connectors includes a male end connector and a female end connector which are plugged into each other; the connector is provided with one of the male end connectors, and/or the rear cover is provided with one of the male end connectors; and the charging socket body is provided with the female end connectors which are connected to the male end connectors in one-to-one correspondence.

Optionally, there is further included a mounting portion disposed on the connector or the rear cover, and is integrally injection-molded with or detachably connected to the male end connector.

Optionally, the male end connector includes an electrically conductive material, and is U-shaped or V-shaped, two ends of which protrude from a mounting surface of the mounting portion.

Optionally, a front end of the U-shaped male end connector or the V-shaped male end connector is provided with a chamfer or a fillet.

Optionally, the male end connector includes an electrically conductive material, and is U-shaped or V-shaped; the mounting portion further includes a cavity with one end opened, and two ends of the U-shaped male end connector or the V-shaped male end connector protrude from a bottom surface of the cavity.

Optionally, each of the female end connector includes an interlock connecting seat and two connecting terminals, in which the interlock connecting seat is provided with two through-holes, and the two connecting terminals are respectively mounted in the corresponding through-holes, one end of the connecting terminal being electrically connected to the control device, and the other end being electrically connected to the corresponding male end connector.

Optionally, there is further included a clamping piece and a clamping groove, in which the clamping piece is disposed on one of an outer periphery of the connecting terminal and an inner wall of the corresponding through-hole, and the clamping groove is disposed on the other of the outer periphery of the connecting terminal and the inner wall of the corresponding through-hole.

Optionally, each of the interlock connecting seats is integrally injection-molded with or detachably connected to the charging socket body.

Optionally, the top of the connecting terminal is lower than the top of the through-hole, and the male end connector is U-shaped or V-shaped, two ends of which are respectively inserted into the corresponding through-holes to be electrically connected to the connecting terminals therein.

Optionally, a contact resistance between the male end connector and the connecting terminal is less than 9 mΩ.

Optionally, the interlock connecting seat includes a base and a protrusion, and two of the through-holes pass through the base and the protrusion respectively; the male end connector is U-shaped or V-shaped and is fixedly connected to the mounting portion of the connector or of the rear cover, the mounting portion further includes a cavity with one end opened, and two ends of the U-shaped male end connector or the V-shaped male end connector protrude from a bottom surface of the cavity; and the protrusion is matched with the cavity by plugging, and the two ends of the U-shaped male end connector or the V-shaped male end connector are inserted into the corresponding through-holes to be electrically connected to the connecting terminals therein.

Optionally, when the connector or the rear cover and the charging socket body are in a mounting position, two ends of the U-shaped male end connector or the V-shaped male end connector are overlapped with the connecting terminal by plugging.

Optionally, a sealing device is disposed between the connector, the rear cover and the charging socket body.

Optionally, the connector and the rear cover are connected to the charging socket body by means of one or more of adhesive connection, magnetic connection, bayonet connection, plugging connection and latching connection.

According to another aspect of the present disclosure, there is provided a charging apparatus, comprising a charging terminal, a cable and the aforementioned high-voltage interlock structure for the electric vehicle charging socket, in which the charging terminal is connected to the cable and disposed in the charging socket body to conduct high-voltage current; when the connector and/or the rear cover is completely separated from the charging socket body, the male end connector and the female end connector are disconnected, and at the same time, a signal is given to the control device so that the control device disconnects the high-voltage current in the cable.

Optionally, the charging terminal is connected to a plug-in terminal of a mating end to conduct current, and when the male end connector is about to be separated from the female end connector, the charging terminal is not separated from the plug-in terminal.

The high-voltage interlock structure for an electric vehicle charging socket of the present disclosure has the following effects:
1. By using the high-voltage interlock structure for the electric vehicle charging socket, when any of the male end connectors is separated from the female end connector, the control device can automatically disconnect a high-voltage circuit to prevent the casualty of an operator during the repairing or use.
2. By disposing two high-voltage interlock connectors on one charging socket, it is convenient for the operator to select the high-voltage interlock connector convenient to be opened as needed, thereby facilitating the operator to repair the devices.

Other features and advantages of the present disclosure will be clearer from the following detailed description of the exemplary embodiments of the present disclosure with reference to the drawings.

### BRIEF DESCRIPTION OF THE DRAWINGS

The drawings, which are incorporated in and constitute a part of the specification, illustrate the embodiments of the present disclosure and together with the description thereof, serve to explain the principles of the present disclosure.
FIG. 1 illustrates an exploded view of a high-voltage interlock structure for an electric vehicle charging socket in the present disclosure;
FIG. 2 illustrates a schematic diagram of a connector in the present disclosure;
FIGS. 3 and 4 illustrate schematic diagrams of a rear cover in the present disclosure;
FIG. 5 illustrates a schematic diagram of a charging socket body in the present disclosure;
FIG. 6 illustrates a stereo diagram of a charging socket body in the present disclosure;
FIG. 7 illustrates a cross-sectional view of a charging socket body in the present disclosure;
FIG. 8 illustrates an enlarged view at Part A in FIG. 6;
FIG. 9 illustrates a cross-sectional view of a charging socket body in the present disclosure;
FIG. 10 illustrates an enlarged view at Part B in FIG. 9;
FIG. 11 illustrates a structural diagram of an interlock connecting seat in the present disclosure;
FIG. 12 illustrates a cross-sectional view of an interlock connecting seat in the present disclosure.

### Reference Numerals:

1: charging socket body; 11: plug-in terminal; 2: connector; 21: charging terminal; 3: rear cover; 4: male end connector; 5: female end connector; 51: interlock connecting seat; 52: connecting terminal; 514: guiding portion; 511: base; 512: protrusion; 513: through-hole; 6: mounting portion; 61: mounting surface; 7: sealing device.

### DETAILED DESCRIPTION OF THE PREFERRED EMBODIMENTS

Various exemplary embodiments of the present disclosure will now be described in detail with reference to the drawings. It should be noted that the relative arrangements, numerical expressions and values of components and steps set forth in these embodiments do not limit the scope of the present disclosure unless otherwise specified.

The following description of at least one exemplary embodiment is merely illustrative and is in no way intended to limit the present disclosure and the application or use thereof.

Techniques, methods and devices known to those of ordinary skill in the art may not be discussed in detail, but they should be regarded as part of the specification under appropriate circumstances.

In all examples illustrated and discussed here, any specific value should be interpreted as illustrative only and not as a limitation. Therefore, other examples of the exemplary embodiments may have different values.

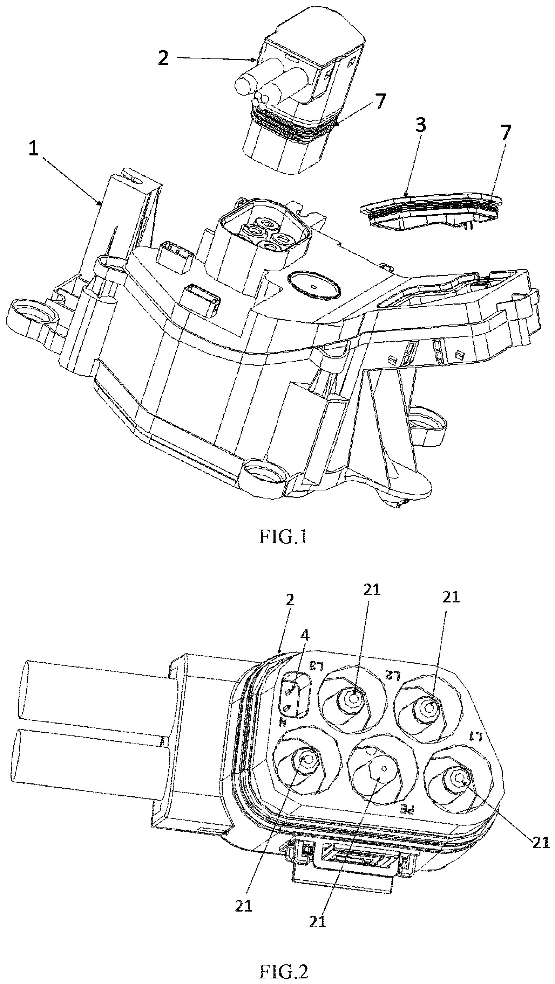

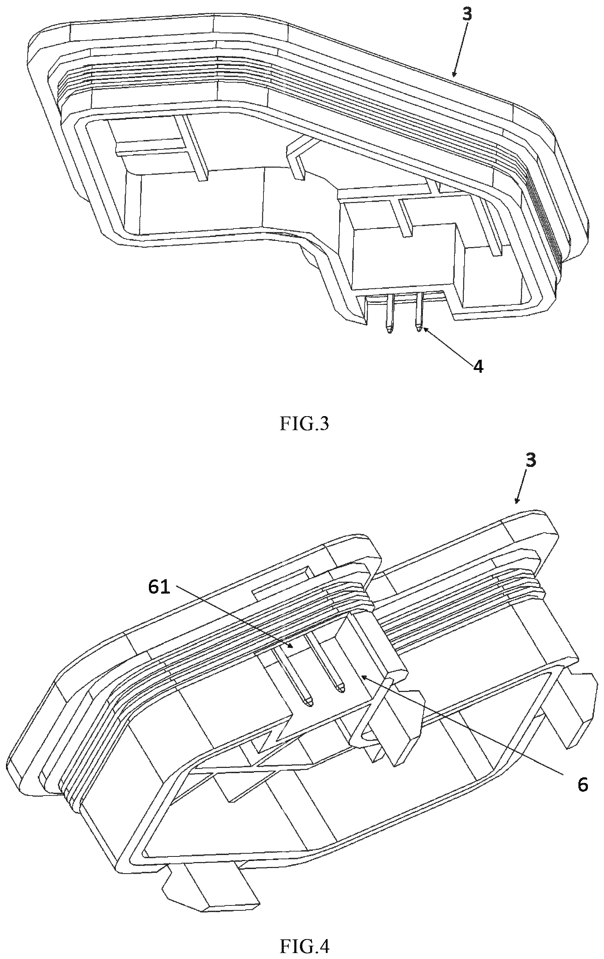

As illustrated in FIGS. 1 to 5, a high-voltage interlock structure for an electric vehicle charging socket includes:
a charging socket body 1;
at least one connector 2 detachably connected to the charging socket body 1;
a rear cover 3 detachably connected to the charging socket body 1;
a control device disposed in the charging socket body 1 or an electric vehicle;
high-voltage interlock connectors, in which one of the high-voltage interlock connectors is disposed between the charging socket body 1 and the connector 2, and/or one of the high-voltage interlock connectors is disposed between the charging socket body 1 and the rear cover 3, and the high-voltage interlock connector is connected to a circuit where the control device is located;
when any of the high-voltage interlock connectors is disconnected, the control device controls the charging socket to be disconnected from a power source.

During implementation, the connector 2 may be an AC connector or a DC connector. The connector 2 is connected to a power source and an energy storage device (e.g., a battery of a new energy vehicle), and transmits the energy of the power source to the energy storage device. During use, it is inevitable that the charging socket needs to be repaired and maintained. When the connector 2 or the rear cover 3 is detached, if the connector is not disconnected from the power source, there is a risk of electric shock casualty caused by a short circuit.

During implementation, if only one AC connector is disposed on the charging socket, the high-voltage interlock connector includes a first high-voltage interlock connector and a second high-voltage interlock connector, in which the first high-voltage interlock connector is disposed between the charging socket body 1 and the connector 2, and/or the second high-voltage interlock connector is disposed between the charging socket body 1 and the rear cover 3, and the high-voltage interlock connector is connected to a circuit where the control device is located;
the control device is configured to control the charging socket to be disconnected from the power source when the high-voltage interlock connector is disconnected.

During implementation, by using the high-voltage interlock connectors, when a certain high-voltage interlock connector is disconnected, the control device automatically controls the charging socket to be disconnected from the power source, so as to avoid the casualty of the operator during the repairing or use. By disposing two high-voltage interlock connectors on one charging socket, it is convenient for the operator to select the high-voltage interlock connector convenient to be opened as needed, thereby facilitating the operator to repair the devices.

During implementation, by disposing the high-voltage interlock connector between the connector 2 and the charging socket body 1, the connector 2 can be separated from the charging socket body 1 during mounting, so that the control device controls the charging socket to be disconnected from the power source, and the operator is prevented from touching the conductive device inside the connector 2 and getting an electric shock during the mounting of the charging socket. By disposing the high-voltage interlock connector between the rear cover 3 and the charging socket body 1, it is possible to separate the charging socket from the power source when the connector 2 is forgotten to be separated from the charging socket body 1 during repairing, so as to prevent the electric shock casualty of the operator.

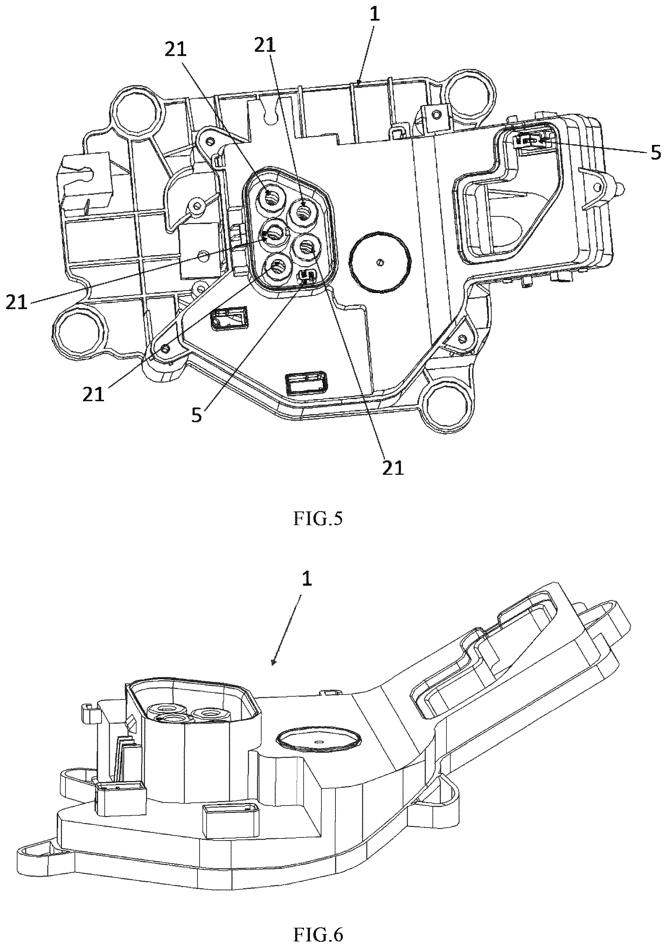

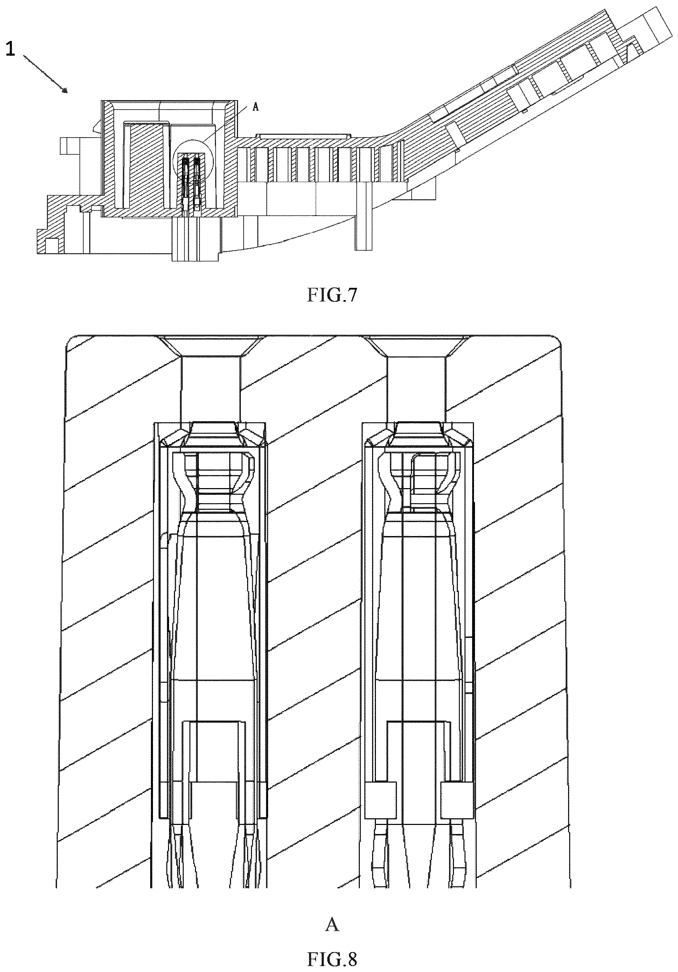

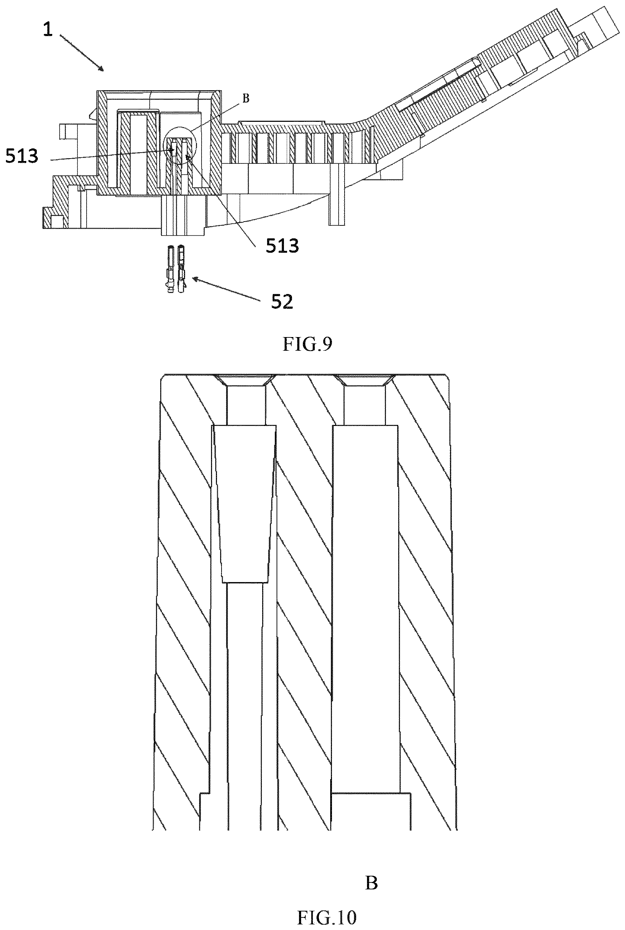

In an embodiment of the high-voltage interlock structure for the electric vehicle charging socket of the present disclosure, as illustrated in FIGS. 6 to 10, each of the high-voltage interlock connectors includes a male end connector 4 and a female end connector 5 which are plugged into each other; the connector 2 is provided with one of the male end connectors 4, and/or the rear cover 3 is provided with one of the male end connectors 4; and the charging socket body 1 is provided with the female end connectors 5 which are connected to the male end connectors 4 in one-to-one correspondence.

During implementation, the first high-voltage interlock connector includes a male end connector 4 and a female end connector 5 which are plugged into each other; the male end connector 4 is disposed on one of the connector 2 and the charging socket body 1, and the female end connector 5 is disposed on the other of the connector 2 and the charging socket body 1. The second high-voltage interlock connector includes a male end connector 4 and a female end connector 5 which are plugged into each other; the male end connector 4 is disposed on one of the rear cover 3 and the charging socket body 1, and the female end connector 5 is disposed on the other of the rear cover 3 and the charging socket body 1.

During implementation, by disposing the high-voltage interlock connector as the male end connector 4 and the female end connector 5 which are plugged into each other, the disconnection and connection of the high-voltage interlock connector can be facilitated for the convenience of the use by the operator.

Further, a mounting portion 6 is further included, which is disposed on the connector 2 or the rear cover 3, and is integrally injection-molded with or detachably connected to the male end connector 4.

During implementation, the male end connector 4 is disposed on one of the connector 2 and the charging socket body 1, and the female end connector 5 is disposed on the other of the connector 2 and the charging socket body 1; alternatively, the male end connector 4 is disposed on one of the rear cover 3 and the charging socket body 1, and the female end connector 5 is disposed on the other of the rear cover 3 and the charging socket body 1. At this time, the mounting portion 6 is disposed on one of the connector 2 and the charging socket body 1 and matched with the male end connector 4; the mounting portion 6 is disposed on one of the rear cover 3 and the charging socket body 1 and matched with the male end connector 4; and the mounting portion 6 is integrally injection-molded with or detachably connected to the male end connector 4.

During implementation, the connection mode between the male end connector 4 and the mounting portion 6 may be set according to actual needs. By means of the integrally injection-molded connection, the two parts can be connectedly more securely, and by means of the detachable connection, the damaged one of the connected two parts can be replaced.

Further, as illustrated in FIGS. 2 to 4, the male end connector 4 includes an electrically conductive material, and is U-shaped or V-shaped, two ends of which protrude from a mounting surface 61 of the mounting portion 6.

During implementation, the male end connector 4 is configured as a U-shaped male end connector or a V-shaped male end connector, two ends of which protrude from the mounting surface 61 of the mounting portion 6. During implementation, by disposing the male end connector 4 as a U-shaped male end connector or a V-shaped male end connector, two ends of which protrude from the mounting surface 61, the connection between the male end connector 4 and the female end connector 5 can be facilitated for the convenience of the operation.

Further, a front end of the U-shaped male end connector or the V-shaped male end connector 4 is provided with a chamfer or a fillet.

During implementation, a guiding portion 514 may also be disposed at the top of a through-hole 513 toward the top of a connecting terminal 52, an inner radial dimension of the guiding portion 514 gradually decreases from the top of the through-hole 513 toward the top of the connecting terminal 52, and an end of the male end connector 4 may enter the through-hole 513 via the guiding portion 514 to complete a plug-in connection with the connecting terminal 52. By disposing a chamfer or a fillet at the front end of the male end connector 4, it is easier and more convenient to insert the male end connector 4 into the top of the connecting terminal 52, or inserted into the guiding portion 514 disposed at the top of the through-hole 513.

Further, the male end connector 4 includes an electrically conductive material, and is U-shaped or V-shaped. The mounting portion 6 further includes a cavity with one end opened, and two ends of the U-shaped male end connector 4 or the V-shaped male end connector 4 protrude from a bottom surface of the cavity.

During implementation, the mounting portion 6 further includes a cavity with at least one end opened, and two ends of the U-shaped male end connector or the V-shaped male end connector protrude from a bottom surface of the cavity.

During implementation, the male end connector 4 may be set as a U-shaped male end connector or a V-shaped male end connector, two ends of which protrude from the bottom surface of the cavity, which facilitates the connection between the male end connector 4 and the female end connector 5 for the convenience of operation. Through the male end connector 4 including the electrically conductive material, the electrical connection with the female end connector 5 can be realized, and the control device controls the charging socket to be connected to the power source depending on whether the male end connector 4 is electrically connected to the female end connector 5.

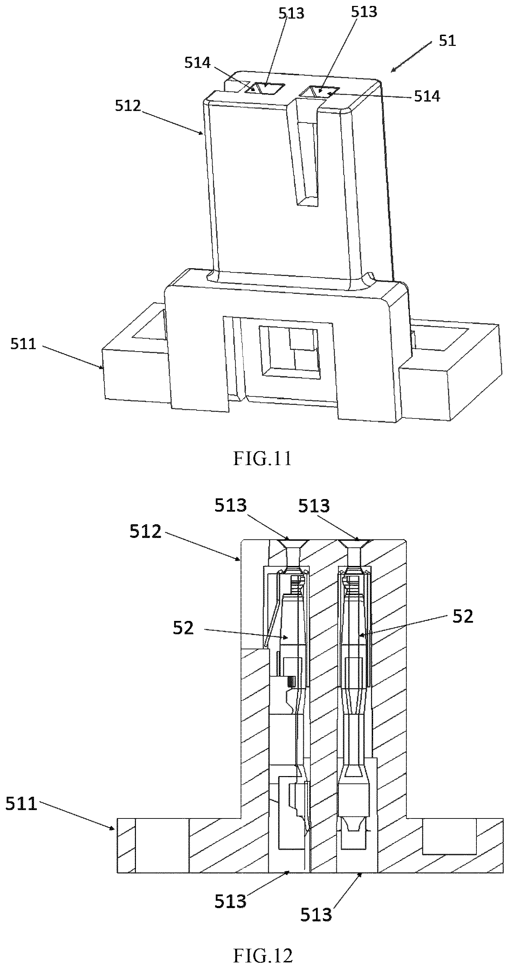

Further, as illustrated in FIGS. 11 and 12, each of the female end connector 5 includes an interlock connecting seat 51 and two connecting terminals 52, in which the interlock connecting seat 51 is provided with two through-holes 513, and the two connecting terminals 52 are respectively mounted in the corresponding through-holes 513, one end of the connecting terminal 52 being electrically connected to the control device, and the other end being electrically connected to the corresponding male end connector 4.

During implementation, the female end connector 5 includes an interlock connecting seat 51 and two connecting terminals 52, in which the interlock connecting seat 51 is provided with two through-holes 513, and the two connecting terminals 52 are respectively mounted in the corresponding through-holes 513, one end of the connecting terminal 52 being electrically connected to the control device, and the other end being electrically connected to the corresponding male end connector 4, which facilitates the female end connector 5 to be plugged with two ends of the U-shaped male end connector or the V-shaped male end connector 4, so that the operation is convenient and the practicability is high.

Further, a clamping piece and a clamping groove are further included, in which the clamping piece is disposed on one of an outer periphery of the connecting terminal 52 and an inner wall of the corresponding through-hole 513, and the clamping groove is disposed on the other of the outer periphery of the connecting terminal 52 and the inner wall of the corresponding through-hole 513.

During implementation, by disposing the clamping piece and the clamping groove, the connector 2 and the rear cover 3 can be prevented from being separated from the charging socket body 1 in the charging process of the charging socket, thereby increasing the stability of the charging socket in the charging process.

Further, each of the interlock connecting seats 51 is integrally injection-molded with or detachably connected to the charging socket body 1.

During implementation, the male end connector 4 is disposed on one of the connector 2 and the charging socket body 1, and the female end connector 5 is disposed on the other of the connector 2 and the charging socket body 1; alternatively, the male end connector 4 is disposed on one of the rear cover 3 and the charging socket body 1, and the female end connector 5 is disposed on the other of the rear cover 3 and the charging socket body 1. At this time, the interlock connecting seat 51 is integrally injection-molded with or detachably connected to the connector 2; alternatively, the interlock connecting seat 51 is integrally injection-molded with or detachably connected to the rear cover 3; alternatively, the interlock connecting seat 51 is integrally injection-molded with or detachably connected to the charging socket body 1.

During implementation, the connection modes between the interlock connecting seat 51 and the charging socket body 1, between the interlock connecting seat 51 and the connector 2, and between the interlock connecting seat 51 and the rear cover 3 may be set according to actual needs. By means of the integrally injection-molded connection, the two parts can be connected more securely, and by means of the detachable connection, the damaged one of the connected two parts can be replaced.

Further, the top of the connecting terminal 52 is lower than the top of the through-hole 513, and the male end connector 4 is U-shaped or V-shaped, two ends of which are respectively inserted into the corresponding through-holes 513 to be electrically connected to the connecting terminals 52 in the through-holes 513.

During implementation, the top of the connecting terminal 52 is lower than the top of the through-hole 513, and two ends of the U-shaped male end connector or the V-shaped male end connector are respectively inserted into the corresponding through-holes 513 to be electrically connected to the connecting terminals 52 therein.

During implementation, by being configured to be U-shaped or V-shaped, the male end connector 4 can be conveniently plugged with the female end connector 5 to form a loop therewith. The control device controls the charging socket to be connected to the power source, so that the male end connector 4 can be completely separated from the female end connector 5. At this time, the control system controls the charging socket to be disconnected from the power source according to a signal indicating that the male end connector 4 is disconnected from the female end connector 5, and the operation is simple.

Further, a contact resistance between the male end connector 4 and the connecting terminal 52 is less than 9 mΩ.

In an embodiment, the contact resistance between the male end connector 4 and the connecting terminal 52 is less than 9 mΩ. Exemplarily, the contact resistance between the male end connector 4 and the connecting terminal 52 is less than 1 mΩ. In general, large current needs to be conducted between the male end connector 4 and the connecting terminal 52, and if the contact resistance between the male end connector 4 and the connecting terminal 52 is greater than 9 mΩ, a large temperature rise will occur at the contact position, and the temperature increasingly rises with the elapse of time. When the temperature between the male end connector 4 and the connecting terminal 52 is too high, an internal stress will be caused between the male end connector 4 and an electrically conductive anti-corrosion layer on a surface thereof and between the connecting terminal 52 and an electrically conductive anti-corrosion layer on a surface thereof, and the conductive anti-corrosion layers will fall off in serious cases. In addition, when the temperature between the male end connector 4 and the connecting terminal 52 is too high, the effect of insulation protection cannot be achieved, and in serious cases, a short circuit of lines may be caused, which leads to the damage of the charging socket and even safety accidents such as burning. Therefore, the inventor sets the contact resistance between the male end connector 4 and the connecting terminal 52 to be less than 9 mΩ.

In order to verify the influence of the contact resistance between the male end connector 4 and the connecting terminal 52 on the temperature rise and the electrical conductivity of the high-voltage interlock structure, the inventor selects the same male end connector 4, and the connecting terminals 52 with different contact resistances, to test the electrical conductivity and the temperature rise.

The test on the electrical conductivity is to check the electrical conductivity at the corresponding plugged position after the male end connector 4 is plugged with the connecting terminal 52 and the plugged structure is electrified. **In** this embodiment, the electrical conductivity greater than 99% is an ideal value.

The test on the temperature rise is to supply the same power to the plugged structure, detect the temperatures of the male end connector 4 and the connecting terminal 52 at the same position before the power supply and after the temperature is stable in a closed environment, and take a difference therebetween to obtain an absolute value. **In** this embodiment, the temperature rise greater than 50 K is unqualified.

**Table 10: Influence of different contact resistances between the male end connector 4 and the connecting terminal 52 on the electrical conductivity and the temperature rise**

| Different contact resistances between the male end connector 4 and the connecting terminal 52 (mΩ) | | | | | | | | |
|---|---|---|---|---|---|---|---|---|
| 10 | 9 | 7 | 5 | 4 | 3 | 2 | 1 | 0.9 |

| Temperature rise at the plugged position of the male end connector 4 and the connecting terminal 52 (K) | | | | | | | | |
|---|---|---|---|---|---|---|---|---|
| 56 | 49 | 43 | 36 | 30 | 29 | 20 | 18 | 7 |

| Electrical conductivity at the plugged position of the male end connector 4 and the connecting terminal 52 (%) | | | | | | | | |
|---|---|---|---|---|---|---|---|---|
| 98.7 | 99.3 | 99.5 | 99.6 | 99.6 | 99.7 | 99.7 | 99.8 | 99.9 |

As can be seen from Table 1, when the contact resistance between the male end connector 4 and the connecting terminal 52 is greater than 9 mΩ, the temperature rise at the plugged position of the male end connector 4 and the connecting terminal 52 exceeds 50 K, and at the same time, the electrical conductivity at the plugged position of the male end connector 4 and the connecting terminal 52 is less than 99%, which does not meet the standard requirement. Therefore, the inventor sets the contact resistance between the male end connector 4 and the connecting terminal 52 to be less than 9 mΩ. Meanwhile, the inventor finds that when the contact resistance is less than 1 mΩ, the amplitude of the temperature rise is further decreased obviously, and at the same time, the electrical conductivity is also high, so the contact resistance between the male end connector 4 and the connecting terminal 52 is exemplarily less than 1 mΩ.

Further, the interlock connecting seat 51 includes a base 511 and a protrusion 512, and two of the through-holes 513 pass through the base 511 and the protrusion 512 respectively; the male end connector 4 is U-shaped or V-shaped and is fixedly connected to the mounting portion 6 of the connector 2 or the mounting portion 6 of the rear cover 3, the mounting portion 6 further includes a cavity with one end opened, and two ends of the U-shaped male end connector 4 or the V-shaped male end connector 4 protrude from a bottom surface of the cavity; and the protrusion 512 is matched with the cavity by plugging, and the two ends of the U-shaped male end connector 4 or the V-shaped male end connector 4 are inserted into the corresponding through-holes 513 to be electrically connected to the connecting terminals 52 in the corresponding through-holes 513.

During implementation, the interlock connecting seat 51 includes a base 511 and a protrusion 512, and two of the through-holes 513 pass through the base 511 and the protrusion 512 respectively; and the protrusion 512 is matched with the cavity by plugging.

During implementation, by disposing the mounting portion 6 as a cavity with one end opened and the protrusion 512 to be matched with the cavity by plugging, it is possible to further ensure the stability of the connection between the male end connector 4 and the female end connector 5, and prevent the connection between the male end connector 4 and the female end connector 5 from being unsecure.

As illustrated in FIGS. 2 to 4, in the illustrated embodiments, the male end connector 4 is disposed on the mounting portion 6, the mounting portion 6 is disposed on the connector 2 or the rear cover 3, and the interlock connecting seat 51 is disposed on the charging socket body 1. Although the embodiment in which the mounting portion 6 is disposed on the charging socket body 1 and the interlock connecting seat 51 is disposed on the connector 2 or the rear cover 3 is not illustrated in the drawings, it falls within the protection scope of the present disclosure.

Further, when the connector 2 or the rear cover 3 and the charging socket body 1 are in a mounting position, two ends of the U-shaped male end connector or the V-shaped male end connector 4 are overlapped with the connecting terminal 52 by plugging.

During implementation, when the connector 2 or the rear cover 3 and the charging socket body 1 are in a mounting position, it only requires that the male end connector 4 and the female end connector 5 can be in contact to realize current conduction, and an overlapping length of two ends of the U-shaped male end connector or the V-shaped male end connector overlap with the connecting terminal 52 is not specifically limited.

During implementation, a distance that the connector 2 or the rear cover 3 moves from the mounting position with the charging socket body 1 to a position of complete separation is not specifically limited, as long as the male end connector 4 and the female end connector 5 can be in contact to realize current conduction when the connector 2 or the rear cover 3 is connected to the charging socket body 1, and the operation is convenient when the connector 2 or the rear cover 3 is separated from the charging socket body 1.

In an embodiment of the high-voltage interlock structure for the electric vehicle charging socket of the present disclosure, a sealing device 7 is disposed between the connector 2, the rear cover 3 and the charging socket body 1.

During implementation, by disposing the sealing device 7, it is possible to prevent dust and impurities from entering the charging socket body 1, and prolong the service life of the charging socket.

In an embodiment of the high-voltage interlock structure for the electric vehicle charging socket of the present disclosure, the connector 2 and the rear cover 3 are connected to the charging socket body 1 by means of one or more of adhesive connection, magnetic connection, bayonet connection, plugging connection and latching connection.

During implementation, the connection mode between the connector 2 or the rear cover 3 and the charging socket body 1 is not specifically limited, as long as the connector 2 or the rear cover 3 is detachably connected to the charging socket body 1, so that the rear cover 3 and the connector 2 can be detached by the user as needed, which is convenient and practical.

A charging apparatus, including a charging terminal 21, a cable and the aforementioned high-voltage interlock structure for the electric vehicle charging socket, in which the charging terminal 21 is connected to the cable and disposed in the charging socket body 1 to conduct high-voltage current; when the connector 2 and/or the rear cover 3 is completely separated from the charging socket body 1, the male end connector 4 and the female end connector 5 are disconnected, and at the same time, a signal is given to the control device so that the control device disconnects the high-voltage current in the cable.

During implementation, the charging apparatus is provided with the high-voltage interlock structure for an electric vehicle charging socket, thus, when the connector 2 and/or the rear cover 3 is completely separated from the charging socket body 1, the male end connector 4 and the female end connector 5 are disconnected, and at the same time, a signal is given to the control device so that the control device disconnects the high-voltage current in the cable, thereby ensuring the safety of the operator.

In an embodiment of the charging apparatus of the present disclosure, the charging terminal 21 is connected to a plug-in terminal 11 of a mating end to conduct current, and when the male end connector 4 is about to be separated from the female end connector 5, the charging terminal 21 is not separated from the plug-in terminal 11.

During implementation, the mating end is disposed on the charging socket body 1 and covered by the connector 2. When the male end connector 4 between the connector 2 and the charging socket body 1 is about to be separated (i.e., disconnected) from the female end connector 5, the charging terminal 21 is not separated from the plug-in terminal 11. At this time, since the charging socket body 1 has been powered off when the male end connector 4 is completely disconnected from the female end connector 5, by separating the charging terminal 21 from the plug-in terminal 11, it is possible to avoid electrochemical corrosion between the charging terminal 21 and the plug-in terminal 11, and prevent sparks from occurring when the charging terminal 21 is separated from the plug-in terminal 11.

During implementation, when the connector 2 is mounted on the charging socket body 1, the male end connector 4 and the female end connector 5 may be partially overlapped for a distance less than the overlapping length of the charging terminal 21 and the plug-in terminal 11, so that after the male end connector 4 is separated from the female end connector 5, the charging terminal 21 is separated from the plug-in terminal 11 without current flowing through the charging socket body 1, which avoids electrochemical corrosion between the charging terminal 21 and the plug-in terminal 11, and prevents sparks from occurring when the charging terminal 21 is separated from the plug-in terminal 11.

Although some specific embodiments of the present disclosure have been described in detail by way of examples, it should be understood by those skilled in the art that the above examples are illustrative only and are not intended to limit the scope of the present disclosure. It should be understood by those skilled in the art that the above embodiments can be modified without departing from the scope and spirit of the present disclosure. The scope of the present disclosure is defined by the appended claims.

## Claims

1. A high-voltage interlock structure for an electric vehicle charging socket, comprising:
a charging socket body (1);
at least one connector (2) detachably connected to the charging socket body (1);
a rear cover (3) detachably connected to the charging socket body (1);
a control device disposed in the charging socket body (1) or an electric vehicle;
high-voltage interlock connectors, one of the high-voltage interlock connectors is disposed between the charging socket body (1) and the connector (2), and/or one of the high-voltage interlock connectors is disposed between the charging socket body (1) and the rear cover (3), and the high-voltage interlock connector is connected to a circuit where the control device is located;
when any of the high-voltage interlock connectors is disconnected, the control device controls the charging socket to be disconnected from a power source;
wherein each of the high-voltage interlock connectors comprises a male end connector (4) and a female end connector (5) which are plugged into each other; the connector (2) is provided with one of the male end connectors (4), and/or the rear cover (3) is provided with one of the male end connectors (4); the charging socket body (1) is provided with the female end connectors (5) which are connected to the male end connectors (4) in one-to-one correspondence; and the male end connector (4) is U-shaped or V-shaped;
wherein the high-voltage interlock structure further comprises a mounting portion (6) disposed on the connector (2) or the rear cover (3), and is integrally injection-molded with or detachably connected to the male end connector (4);
wherein the male end connector (4) comprises an electrically conductive material, and two ends protrude from a mounting surface (61) of the mounting portion (6).
**characterized in that**, a front end of the U-shaped male end connector or the V-shaped male end connector 4 is provided with a chamfer or a fillet;
the female end connector (5) comprises an interlock connecting seat (51) and two connecting terminals (52), wherein the interlock connecting seat (51) is provided with two through-holes (513), and the two connecting terminals (52) are respectively mounted in the corresponding through-holes (513), one end of the connecting terminal (52) being electrically connected to the control device, and the other end of the connecting terminal (52) being electrically connected to the corresponding male end connector (4); and
a guiding portion (514) is disposed at the top of a through-hole (513) toward the top of a connecting terminal (52), an inner radial dimension of the guiding portion (514) gradually decreases from the top of the through-hole (513) toward the top of the connecting terminal (52), and an end of the male end connector (4) enters the through-hole (513) via the guiding portion (514) to complete a plug-in connection with the connecting terminal (52).

2. The high-voltage interlock structure for the electric vehicle charging socket according to claim 1, wherein the male end connector (4) comprises an electrically conductive material; the mounting portion (6) further comprises a cavity with one end opened, and two ends of the U-shaped male end connector (4) or the V-shaped male end connector (4) protrude from a bottom surface of the cavity.

3. The high-voltage interlock structure for the electric vehicle charging socket according to claim 1, further comprising a clamping piece and a clamping groove, wherein the clamping piece is disposed on one of an outer periphery of the connecting terminal (52) and an inner wall of the corresponding through-hole (513), and the clamping groove is disposed on the other one of the outer periphery of the connecting terminal (52) and the inner wall of the corresponding through-hole (513).

4. The high-voltage interlock structure for the electric vehicle charging socket according to claim 1, wherein each of the interlock connecting seats (51) is integrally injection-molded with or detachably connected to the charging socket body (1).

5. The high-voltage interlock structure for the electric vehicle charging socket according to claim 1, wherein the top of the connecting terminal (52) is lower than the top of the through-hole (513), two ends of the U-shaped male end connector (4) or the V-shaped male end connector (4) are respectively inserted into the corresponding through-holes (513) to be electrically connected to the connecting terminals (52) therein.

6. The high-voltage interlock structure for the electric vehicle charging socket according to claim 2, wherein a contact resistance between the male end connector (4) and the connecting terminal (52) is less than 9 mΩ.

7. The high-voltage interlock structure for the electric vehicle charging socket according to claim 1, wherein the interlock connecting seat (51) comprises a base (511) and a protrusion (512), and two of the through-holes (513) pass through the base (511) and the protrusion (512) respectively; the male end connector (4) is fixedly connected to the mounting portion (6) of the connector (2) or of the rear cover (3), the mounting portion (6) further comprises a cavity with one end opened, and two ends of the U-shaped male end connector (4) or the V-shaped male end connector (4) protrude from a bottom surface of the cavity; and the protrusion (512) is matched with the cavity by plugging, and the two ends of the U-shaped male end connector (4) or the V-shaped male end connector (4) are inserted into the corresponding through-holes (513) to be electrically connected to the connecting terminals (52) therein.

8. The high-voltage interlock structure for the electric vehicle charging socket according to claim 5, wherein when the connector (2) or the rear cover (3) and the charging socket body (1) are in a mounting position, two ends of the U-shaped male end connector (4) or the V-shaped male end connector (4) are overlapped with the connecting terminal (52) by plugging.

9. The high-voltage interlock structure for the electric vehicle charging socket according to claim 1, wherein a sealing device (7) is disposed between the connector (2), the rear cover (3) and the charging socket body (1); or
the connector (2) and the rear cover (3) are connected to the charging socket body (1) by means of one or more of adhesive connection, magnetic connection, bayonet connection, plugging connection and latching connection.

10. A charging apparatus, comprising a charging terminal (21), a cable and the high-voltage interlock structure for the electric vehicle charging socket according to any of claims 1 to 9, wherein the charging terminal (21) is connected to the cable and disposed in the charging socket body (1) to conduct high-voltage current; when the connector (2) and/or the rear cover (3) is completely separated from the charging socket body (1), the male end connector (4) and the female end connector (5) are disconnected, and at the same time, a signal is given to the control device so that the control device disconnects the high-voltage current in the cable; further
the charging terminal (21) is connected to a plug-in terminal (11) of a mating end to conduct current, and when the male end connector (4) is about to be separated from the female end connector (5), the charging terminal (21) is not separated from the plug-in terminal (11).

## Patentansprüche

1. Hochspannungsverriegelungsstruktur für eine Ladesteckdose eines Elektrofahrzeugs, aufweisend:
einen Ladesteckdosenkörper (1);
mindestens einen Steckverbinder (2), der lösbar mit dem Ladesteckdosenkörper (1) verbunden ist;
eine hintere Abdeckung (3), die lösbar mit dem Ladesteckdosenkörper (1) verbunden ist;
eine im Ladesteckdosenkörper (1) oder in einem Elektrofahrzeug angeordnete Steuervorrichtung;
Hochspannungs-Verriegelungsstecker, wobei einer der Hochspannungs-Verriegelungsstecker zwischen dem Ladesteckdosenkörper (1) und dem Steckverbinder (2) angeordnet ist und/oder einer der Hochspannungs-Verriegelungsstecker zwischen dem Ladesteckdosenkörper (1) und der hinteren Abdeckung (3) angeordnet ist, und der Hochspannungs-Verriegelungsstecker mit einer Schaltung verbunden ist, in der sich die Steuervorrichtung befindet;
wobei, wenn einer der Hochspannungs-Verriegelungsstecker getrennt wird, die Steuervorrichtung die Ladesteckdose so steuert, dass sie von einer Stromquelle getrennt wird;
wobei jeder der Hochspannungs-Verriegelungsstecker einen Stecker (4) und eine Buchse (5) aufweist, die ineinander gesteckt sind; der Steckverbinder (2) mit einem der Stecker (4) versehen ist und/oder die hintere Abdeckung (3) mit einem der Stecker (4) versehen ist; der Ladesteckdosenkörper (1) mit den Buchsen (5) versehen ist, die in einer Eins-zu-Eins-Entsprechung mit den Steckern (4) verbunden sind; und wobei der Stecker (4) U-förmig oder V-förmig ist;
wobei die Hochspannungsverriegelungsstruktur des Weiteren einen Befestigungsabschnitt (6) aufweist, der an dem Steckverbinder (2) oder der hinteren Abdeckung (3) angeordnet ist und einstückig mit dem Stecker (4) spritzgegossen oder lösbar mit diesem verbunden ist;
wobei der Stecker (4) aus einem elektrisch leitfähigen Material besteht und zwei Enden aus einer Befestigungsfläche (61) des Befestigungsabschnitts (6) herausragen;
**dadurch gekennzeichnet, dass** ein vorderes Ende des U-förmigen oder V-förmigen Steckers (4) mit einer Fase oder einer Rundung versehen ist;
die Buchse (5) einen Verriegelungs-Verbindungssitz (51) und zwei Verbindungsanschlüsse (52) aufweist, wobei der Verriegelungs-Verbindungssitz (51) mit zwei Durchgangslöchern (513) versehen ist und die beiden Verbindungsanschlüsse (52) jeweils in den entsprechenden Durchgangslöchern (513) angebracht sind, wobei ein Ende des Verbindungsanschlusses (52) elektrisch mit der Steuervorrichtung verbunden ist und das andere Ende des Verbindungsanschlusses (52) elektrisch mit dem entsprechenden Stecker (4) verbunden ist; und
ein Führungsabschnitt (514) an der Oberseite eines Durchgangslochs (513) in Richtung der Oberseite eines Verbindungsanschlusses (52) angeordnet ist, wobei sich ein innerer Radialabstand des Führungsabschnitts (514) von der Oberseite des Durchgangslochs (513) in Richtung der Oberseite des Verbindungsanschlusses (52) allmählich verringert, und ein Ende des Steckers (4) über den Führungsabschnitt (514) in das Durchgangsloch (513) eintritt, um eine Steckverbindung mit dem Verbindungsanschluss (52) herzustellen.

2. Hochspannungsverriegelungsstruktur für eine Ladesteckdose eines Elektrofahrzeugs nach Anspruch 1, bei der der Stecker (4) ein elektrisch leitfähiges Material aufweist; der Befestigungsabschnitt (6) des Weiteren einen Hohlraum mit einem offenen Ende aufweist und zwei Enden des U-förmigen Steckers (4) oder des V-förmigen Steckers (4) aus einer Bodenfläche des Hohlraums herausragen.

3. Hochspannungsverriegelungsstruktur für eine Ladesteckdose eines Elektrofahrzeugs nach Anspruch 1, die des Weiteren ein Klemmstück und eine Klemmnut aufweist, wobei das Klemmstück an entweder einem Außenumfang des Verbindungsanschlusses (52) oder einer Innenwand des entsprechenden Durchgangslochs (513) angeordnet ist, und die Klemmnut an dem jeweils anderen von dem Außenumfang des Verbindungsanschlusses (52) und der Innenwand des entsprechenden Durchgangslochs (513) angeordnet ist.

4. Hochspannungsverriegelungsstruktur für eine Ladesteckdose eines Elektrofahrzeugs nach Anspruch 1, bei der jeder der Verriegelungs-Verbindungssitze (51) einstückig mit dem Ladesteckdosenkörper (1) spritzgegossen oder lösbar mit diesem verbunden ist.

5. Hochspannungsverriegelungsstruktur für eine Ladesteckdose eines Elektrofahrzeugs nach Anspruch 1, bei der die Oberseite des Verbindungsanschlusses (52) tiefer liegt als die Oberseite des Durchgangslochs (513), wobei zwei Enden des U-förmigen Steckers (4) oder des V-förmigen Steckers (4) jeweils in die entsprechenden Durchgangslöcher (513) eingeführt sind, um mit den darin befindlichen Verbindungsanschlüssen (52) elektrisch verbunden zu werden.

6. Hochspannungsverriegelungsstruktur für eine Ladesteckdose eines Elektrofahrzeugs nach Anspruch 2, bei der ein Kontaktwiderstand zwischen dem Stecker (4) und dem Verbindungsanschluss (52) weniger als 9 mΩ beträgt.

7. Hochspannungsverriegelungsstruktur für eine Ladesteckdose eines Elektrofahrzeugs nach Anspruch 1, bei der der Verriegelungs-Verbindungssitz (51) eine Basis (511) und einen Vorsprung (512) aufweist und zwei der Durchgangslöcher (513) jeweils durch die Basis (511) und den Vorsprung (512) verlaufen; der Stecker (4) fest mit dem Befestigungsabschnitt (6) des Steckverbinders (2) oder der hinteren Abdeckung (3) verbunden ist, wobei der Befestigungsabschnitt (6) des Weiteren einen Hohlraum mit einem offenen Ende aufweist und zwei Enden des U-förmigen Steckers (4) oder des V-förmigen Steckers (4) aus einer Bodenfläche des Hohlraums herausragen; und der Vorsprung (512) durch Einstecken in den Hohlraum eingepasst ist, und die beiden Enden des U-förmigen Steckers (4) oder des V-förmigen Steckers (4) in die entsprechenden Durchgangslöcher (513) eingeführt sind, um mit den darin befindlichen Verbindungsanschlüssen (52) elektrisch verbunden zu werden.

8. Hochspannungsverriegelungsstruktur für eine Ladesteckdose eines Elektrofahrzeugs nach Anspruch 5, bei der, wenn sich der Steckverbinder (2) oder die hintere Abdeckung (3) und der Ladesteckdosenkörper (1) in einer Montageposition befinden, die beiden Enden des U-förmigen Steckers (4) oder des V-förmigen Steckers (4) durch Einstecken mit dem Verbindungsanschluss (52) überlappen.

9. Hochspannungsverriegelungsstruktur für eine Ladesteckdose eines Elektrofahrzeugs nach Anspruch 1, bei der eine Dichtungsvorrichtung (7) zwischen dem Steckverbinder (2), der hinteren Abdeckung (3) und dem Ladesteckdosenkörper (1) angeordnet ist; oder
der Steckverbinder (2) und die hintere Abdeckung (3) mittels einer oder mehrerer der folgenden Verbindungen mit dem Ladesteckdosenkörper (1) verbunden sind: Klebeverbindung, Magnetverbindung, Bajonettverbindung, Steckverbindung und Rastverbindung.

10. Ladevorrichtung, aufweisend einen Ladeanschluss (21), ein Kabel und die Hochspannungsverriegelungsstruktur für eine Ladesteckdose eines Elektrofahrzeugs gemäß einem der Ansprüche 1 bis 9, bei der der Ladeanschluss (21) mit dem Kabel verbunden und im Ladesteckdosenkörper (1) angeordnet ist, um Hochspannungsstrom zu leiten; wenn der Steckverbinder (2) und/oder die hintere Abdeckung (3) vollständig von dem Ladesteckdosenkörper (1) getrennt ist/sind, der Stecker (4) und die Buchse (5) getrennt werden, und gleichzeitig ein Signal an die Steuervorrichtung gesendet wird, damit die Steuervorrichtung den Hochspannungsstrom im Kabel unterbricht; des Weiteren
bei der der Ladeanschluss (21) mit einem Steckkontakt (11) eines Gegenstücks verbunden ist, um Strom zu leiten, und wenn der Stecker (4) kurz davor ist, von der Buchse (5) getrennt zu werden, der Ladeanschluss (21) nicht vom Steckkontakt (11) getrennt wird.

## Revendications

1. Structure de verrouillage à haute tension pour une prise de charge d'un véhicule électrique, comprenant:
un corps de prise de charge (1);
au moins un connecteur (2) relié de manière amovible au corps de prise de charge (1);
un couvercle arrière (3) relié de manière amovible au corps de prise de charge (1);
un dispositif de commande disposé dans le corps de prise de charge (1) ou dans un véhicule électrique;
des connecteurs de verrouillage à haute tension, l'un des connecteurs de verrouillage à haute tension étant disposé entre le corps de prise de charge (1) et le connecteur (2) et/ou l'un des connecteurs de verrouillage à haute tension étant disposé entre le corps de prise de charge (1) et le couvercle arrière (3), et le connecteur de verrouillage à haute tension est reliée à un circuit dans lequel se trouve le dispositif de commande;
dans lequel, lorsqu'un des connecteurs de verrouillage à haute tension est déconnectée, le dispositif de commande commande la prise de charge de manière à ce qu'elle soit déconnectée d'une source d'alimentation;
chacune des connecteurs de verrouillage à haute tension comportant une fiche mâle (4) et une fiche femelle (5) emboîtées l'une dans l'autre; le connecteur (2) étant muni de l'une des fiches mâles (4) et/ou le couvercle arrière (3) étant muni de l'une des fiches mâles (4); le corps de la prise de charge (1) est muni des fiches femelles (5) qui sont associées aux fiches mâles (4) selon une correspondance biunivoque; et dans lequel la fiche mâle (4) est en forme de U ou de V;
la structure de verrouillage à haute tension comportant en outre une partie de fixation (6) qui est disposée sur le connecteur (2) ou le couvercle arrière (3) et qui est moulée par injection d'un seul tenant avec la fiche mâle (4) ou reliée de manière amovible à celle-ci;
la fiche mâle (4) étant constituée d'un matériau électriquement conducteur et deux extrémités faisant saillie hors d'une surface de fixation (61) de la partie de fixation (6) ;
**caractérisé en ce qu'**une extrémité avant de la fiche mâle (4) en forme de U ou de V est pourvue d'un chanfrein ou d'un arrondi;
la fiche femelle (5) comporte un logement de connexion à verrouillage (51) et deux bornes de connexion (52), le logement de connexion à verrouillage (51) étant muni de deux trous traversants (513) et les deux bornes de connexion (52) étant montées respectivement dans les trous traversants correspondants (513), une extrémité de la borne de connexion (52) étant reliée électriquement au dispositif de commande et l'autre extrémité de la borne de connexion (52) étant reliée électriquement à la fiche mâle correspondante (4); et
une partie de guidage (514) est disposée sur la face supérieure d'un trou traversant (513) en direction de la face supérieure d'une borne de connexion (52), la distance radiale interne de la partie de guidage (514) par rapport à la face supérieure du trou traversant (513) en direction de la face supérieure de la borne de connexion (52) diminue progressivement, et une extrémité de la fiche mâle (4) pénètre dans le trou traversant (513) par l'intermédiaire de la partie de guidage (514) afin d'établir une connexion par enfichage avec la borne de connexion (52).

2. Structure de verrouillage à haute tension pour une prise de charge d'un véhicule électrique selon la revendication 1, dans laquelle la fiche mâle (4) est constituée d'un matériau électriquement conducteur; la partie de fixation (6) comporte en outre une cavité à extrémité ouverte, et les deux extrémités de la fiche mâle (4) en forme de U ou de la fiche mâle (4) en forme de V font saillie hors d'une surface inférieure de la cavité.

3. Structure de verrouillage à haute tension pour une prise de charge d'un véhicule électrique selon la revendication 1, qui comprend en outre une pièce de serrage et une rainure de serrage, la pièce de serrage étant disposée soit sur une périphérie extérieure de la borne de connexion (52), soit sur une paroi intérieure du trou traversant correspondant (513), et la rainure de serrage est disposée sur l'autre parmi la périphérie extérieure de la borne de connexion (52) et la paroi intérieure du trou traversant correspondant (513).

4. Structure de verrouillage à haute tension pour une prise de charge d'un véhicule électrique selon la revendication 1, dans laquelle chacun des logements de connexion à verrouillage (51) est moulé par injection d'un seul tenant avec le corps de la prise de charge (1) ou est relié de manière amovible à celui-ci.

5. Structure de verrouillage à haute tension pour une prise de charge d'un véhicule électrique selon la revendication 1, dans laquelle la face supérieure de la borne de connexion (52) est située plus bas que la face supérieure du trou traversant (513), dans laquelle les deux extrémités de la fiche mâle (4) en forme de U ou de la fiche mâle (4) en forme de V sont respectivement insérées dans les trous traversants correspondants (513) afin d'être connectées électriquement aux bornes de connexion (52) qui s'y trouvent.

6. Structure de verrouillage à haute tension pour une prise de charge d'un véhicule électrique selon la revendication 2, dans laquelle la résistance de contact entre la fiche mâle (4) et la borne de connexion (52) est inférieure à 9 mΩ.

7. Structure de verrouillage à haute tension pour une prise de charge d'un véhicule électrique selon la revendication 1, dans laquelle le logement de connexion de verrouillage (51) comporte une base (511) et une saillie (512), et deux des trous traversants (513) s'étendent respectivement à travers la base (511) et la saillie (512); la fiche mâle (4) est solidement reliée à la partie de fixation (6) du connecteur (2) ou au couvercle arrière (3), la partie de fixation (6) comportant en outre une cavité à extrémité ouverte, et deux extrémités de la fiche mâle (4) en forme de U ou de la fiche mâle (4) en forme de V dépassent d'une surface inférieure de la cavité; et la saillie (512) est ajustée par insertion dans la cavité, et les deux extrémités de la fiche mâle (4) en forme de U ou de la fiche mâle (4) en forme de V sont insérées dans les trous traversants correspondants (513) afin d'être connectées électriquement aux bornes de connexion (52) qui s'y trouvent.

8. Structure de verrouillage à haute tension pour une prise de charge d'un véhicule électrique selon la revendication 5, dans laquelle, lorsque le connecteur (2) ou le couvercle arrière (3) et le corps de la prise de charge (1) se trouvent dans une position de montage, les deux extrémités de la fiche mâle (4) en forme de U ou de la fiche mâle (4) en forme de V chevauchent la borne de connexion (52) par emboîtement.

9. Structure de verrouillage à haute tension pour une prise de charge d'un véhicule électrique selon la revendication 1, dans laquelle un dispositif d'étanchéité (7) est disposé entre le connecteur (2), le couvercle arrière (3) et le corps de la prise de charge (1); ou
le connecteur (2) et le couvercle arrière (3) sont reliés au corps de prise de charge (1) au moyen d'une ou plusieurs des liaisons suivantes: liaison adhésive, liaison magnétique, liaison à baïonnette, liaison par enfichage et liaison par encliquetage.

10. Appareil de charge comprenant une borne de charge (21), un câble et la structure de verrouillage à haute tension pour une prise de charge d'un véhicule électrique selon l'une des revendications 1 à 9, dans lequel la borne de charge (21) est reliée au câble et est disposée dans le corps de prise de charge (1) afin de conduire le courant haute tension; lorsque le connecteur (2) et/ou le couvercle arrière (3) sont complètement séparés du corps de prise de charge (1), la fiche mâle (4) et la fiche femelle (5) sont déconnectées, et simultanément, un signal est envoyé au dispositif de commande afin que celui-ci interrompe le courant haute tension dans le câble; en outre
lorsque la borne de charge (21) est connectée à un contact mâle (11) d'un contre-pièce pour conduire le courant, et lorsque la fiche mâle (4) est sur le point d'être déconnectée de la fiche femelle (5), la borne de charge (21) n'est pas déconnectée du contact mâle (11).
